# EUROPÄISCHE PATENTSCHRIFT

(11) **EP 2 771 583 B1**
(45) Veröffentlichungstag und Bekanntmachung des Hinweises auf die Patenterteilung: **09.10.2019**
(21) Anmeldenummer: 12775507.2
(22) Anmeldetag: 24.10.2012
(51) Int. Cl.: F16C 19/38, F16C 33/58, F16C 41/04

(54) **LAGERRING, LAGERRINGSEGMENT, LAGER UND VERFAHREN ZUR EINSTELLUNG EINER VORSPANNUNG EINES WÄLZLAGERS**
BEARING RING, BEARING RING SEGMENT, BEARING AND METHOD FOR ADJUSTING THE INITIAL TENSION OF A BALL BEARING
BAGUE DE ROULEMENT, SEGMENT DE BAGUE DE ROULEMENT, ROULEMENT ET PROCÉDÉ DE RÉGLAGE DE LA PRÉCONTRAINTE D'UN PALIER À ROULEMENT

(30) Priorität: 26.10.2011 DE 102011085258
(43) Veröffentlichungstag der Anmeldung: 03.09.2014
(73) Patentinhaber: Aktiebolaget SKF, 415 50 Göteborg (SE)
(72) Erfinder: ZANG, Christian, 97334 Nordheim (DE)
(74) Vertreter: Kuhstrebe, Jochen
(86) Internationale Anmeldenummer: PCT/EP2012/070997
(87) Internationale Veröffentlichungsnummer: WO 2013/060696

(56) Entgegenhaltungen:
- EP-A2- 1 717 464
- JP-A- 2001 349 327
- JP-A- 2002 213 438
- US-A1- 2002 092 360

## Beschreibung

Die vorliegende Erfindung liegt auf dem Gebiet der Lager, insbesondere auf dem Gebiet der vorgespannten Lager.

Aus der konventionellen Technik ist bekannt, Wälzlager mit einer gewissen Vorspannung zu betreiben bzw. zu montieren. Herkömmliche Wälzlager weisen Lagerringe, das heißt einen Lageraußenring und Lagerinnenring, sowie Wälzkörper auf, wobei die Wälzkörper vielerlei Formen haben können, wie beispielsweise kugelförmig, tonnenförmig, zylinderförmig, kegelförmig, usw. Während des Betriebes werden die Wälzkörper gegen die Laufflächen der Lagerringe gedrückt, so dass diese mit den Laufflächen einen oder mehrere Berührungspunkte, bzw. Berührungsflächen bilden. Diese Berührungsflächen oder -punkte hängen unter anderem von dem Anpressdruck oder der Anpresskraft ab, mit dem oder mit der die Wälzkörper auf die Laufflächen der beiden Lagerringe gedrückt werden. Dieser Druck bzw. diese Kraft hängt im von außen unbelasteten Zustand damit maßgeblich von der Vorspannung des Lagers ab, d.h. davon, welche Kraft bereits bei der Montage zwischen den Lagerringen und den Wälzkörpern wirkt.

Generell kann für den Betrieb eines Lagers Vorspannung wichtig sein. Auf der einen Seite sollen Wälzkörper nicht unbelastet betrieben werden, da diese Situation zu Schlupf und damit zu erhöhtem Verschleiß der Wälzkörper und auch der Laufflächen der Lagerringe kommen kann. Im Betrieb selbst sollen die Wälzkörper demnach an den Laufflächen anliegen, wobei die Berührungsflächen der Wälzkörper von der Belastung des Lagers abhängig sind. In anderen Worten sollen die Berührungsflächen bei höheren Belastungen größer sein, um die Last auf eine größere Fläche in den Laufflächen und an den Wälzkörpern zu verteilen, um so einen geringeren Verschleiß zu erreichen. Bei niedrigen Belastungen sollen die Wälzkörper dennoch kleinere Berührungsflächen aufweisen, damit diese nicht in Schlupf geraten und der Schmierfilm abreißen kann, was wiederum dazu führen kann, dass die Wälzkörper und Laufflächen schneller verschleißen.

Daneben kann eine Vorspannung des Lagers eine bessere Verteilung von äußeren Lasten im Lager mit sich bringen. Eine gleichmäßigere Lastverteilung kann die Lagerlebensdauer erhöhen. Auf der anderen Seite kann eine zu hohe Vorspannung einer Lagerung zu einer zusätzlichen Belastung des Lagers und damit zu einer Reduktion der Lagerlebensdauer führen.

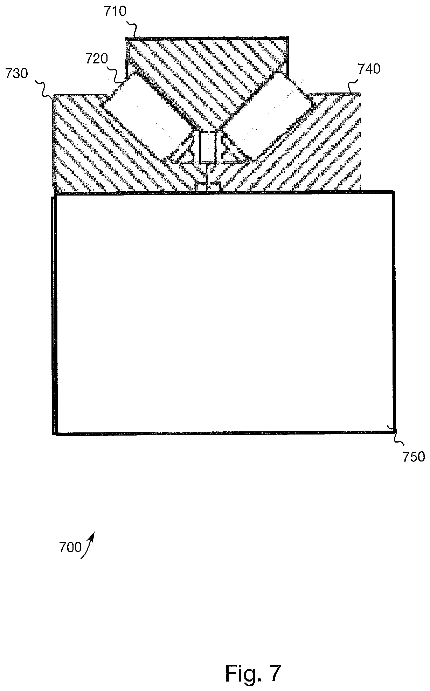

Dies soll im Folgenden anhand der Figur 7 weiter verdeutlicht werden. Die Figur 7 zeigt einen Ausschnitt einer Anordnung 700 aus einem Rollenlager, bzw. Kegelrollenlager, und einer Antriebswelle 750. Das Kegelrollenlager weist dabei einen Lageraußenring 710 und einem geteilten Lagerinnenring 730 bzw. 740 auf. Darüber hinaus zeigt die Figur 7 Wälzkörper 720, die vorliegend als Kegel ausgebildet sind. Die Antriebswelle 750 ist dabei mit den gezeigten Lagerinnenringteilen 730 und 740 gekoppelt.

Um nun zu erreichen, dass die Wälzkörper 720 zwischen den Laufflächen des Lageraußenrings 710 und der Lagerinnenringteile 730 und 740 entsprechend vorgespannt sind, erfordert die Fertigung dieser Bauteile ein hohes Maß an Genauigkeit. Insbesondere bei größeren Lagern, wie beispielsweise Momentenlagern, wie sie bei Windkraftanlagen eingesetzt werden, führen diese hohen Genauigkeitsanforderungen zu hohen Fertigungskosten. Beispielsweise können bei solchen Anlagen Lager mit Durchmessern von mehr als zwei Metern vorkommen. In dem Beispiel der Figur 7 könnte eine hohle Antriebswelle 750 einen Innendurchmesser von 2245mm und einen Außendurchmesser von 2620mm haben, demnach könnte der Innendurchmesser der Lagerinnenringteile ebenfalls bei 2620mm liegen. Ein durchschnittlicher Außendurchmesser des Lagerinnenrings 730, 740 könnte 2740mm betragen.

Kegelrollenlagerungen sollen demnach in vielen Fällen nach der Montage unter Vorspannung betrieben werden. Dabei stellt die Einstellung der Vorspannung im Allgemeinen eine Herausforderung dar. Die erforderliche Vorspannung kann durch genaues Fertigen und der darauffolgenden Blockmontage oder durch Messungen von Größen wie dem Reibmoment oder der Lagersteifigkeit, erreicht werden. Die Anstellung, d.h. das gegenseitige Justieren der Lagerringe, über Reibmoment und Lagersteifigkeit ist im Allgemeinen nur bei Großserien wirtschaftlich.

Die Blockmontage erfordert hohe Genauigkeiten und liegt letztendlich dann immer noch in einer großen Toleranzbreite.

EP 1 717 464 A2 offenbart ein Lager mit einem Lageraußenring mit einer Einrichtung zum Messen einer Dehnung eines Umfangs des Lagerrings und einem wenigstens zweiteiligen Lagerinnenring, wobei das Lager ferner Wälzkörper aufweist, die sich zwischen dem Lagerinnenring und dem Lageraußenring befinden, und wobei der Lagerinnenring axial derart geteilt ist, dass eine Vorspannung des Lagers über eine zwischen den beiden axial geteilten Lagerinnenringteilen wirkende Kraft einstellbar ist.

Es ist daher die Aufgabe der vorliegenden Erfindung, ein verbessertes Konzept zur Fertigung und Montage von Lagern mit einer Vorspannung zu schaffen.

Die Aufgabe wird durch einen Lagerring, ein Lagerringsegment, ein Lager und ein Verfahren zur Einstellung einer Vorspannung gemäß den anhängigen Ansprüchen gelöst. Ausführungsbeispiele beruhen auf der Erkenntnis, dass eine genaue und gleichzeitig einfache Einstellung der Vorspannung von großem Interesse ist, um die toleranzbedingte Streuung der Vorspannung möglichst einzuschränken und damit dem Interessenskonflikt zu begegnen.

Es ist ein Kerngedanke von Ausführungsbeispielen die Verformung der Lagerringe für die Einstellung einer Lagervorspannung auszunutzen. Ausführungsbeispiele beruhen auf der Erkenntnis, dass sich die Lagerringe verformen, insbesondere ausdehnen, wenn die Lager entsprechend belastet oder vorgespannt werden. Ausführungsbeispiele können ferner auf dem Gedanken beruhen, dass mittels eines Dehnungsmessstreifens oder eines anderen Sensors zur Messung der Verformung die Ausdehnung an einem Lager oder einem Lagerringsegment gemessen werden kann, und dass diese Ausdehnung in direktem Zusammenhang mit der Vorspannung steht. In anderen Worten können Ausführungsbeispiele auf dem Kerngedanken beruhen, dass durch Messen einer Dehnung eines Lagerrings auf die Vorspannung des Lagers zurückgeschlossen werden kann und dieses so aufwandsgünstig einstellbar gemacht werden kann.

Ausführungsbeispiele können daher eine Verformung eines Lagerrings messen, zum Beispiel mit einem Dehnungsmessstreifen, und dieser Verformung ein direktes Abbild der lagerinternen Vorspannkräfte zuordnen, so dass diese einstellbar werden. Ausführungsbeispiele können dabei das Ausweitungsverhalten z.B. von Kegelrollenlagern zur Einstellung der Vorspannung ausnutzen. Ausführungsbeispiele können beispielsweise auf der Erkenntnis beruhen, dass ein Lageraußenring eines 2-reihigen Kegelrollenlagers, oder ganz allgemein eines Wälzlagers, sich weitet, wenn die Vorspannung erhöht wird. Ausführungsbeispiele können diese Erkenntnis zur Einstellung einer Lagervorspannung ausnutzen. Ausführungsbeispiele können daher den Vorteil bieten, dass eine wesentlich aufwändigere Blockmontage, bei der die Lagerringe nach entsprechender Paarung miteinander verspannt werden müssen, entfallen kann.

Ausführungsbeispiele können daher einen Lagerring oder ein Lagerringsegment des Lagerrings mit einer Einrichtung zum Messen einer Dehnung eines Umfangs des Lagerrings umfassen. Die Einrichtung zum Messen kann z.B. durch einen Dehnungsmessstreifen oder einen Dehnungssensor realisiert sein, in anderen Ausführungsbeispielen sind auch optische Messeinrichtungen zur Messung einer Ausdehnung oder Verformung des Umfangs denkbar. In anderen Worten können Ausführungsbeispiele den Lagerring oder das Lagerringsegment derart bereitstellen, dass der Dehnungsmessstreifen mit dem Lagerring oder dem Lagerringsegment mechanisch gekoppelt ist, sodass eine Änderung des Umfangs des Lagerrings erfassbar wird. Z.B. kann sich der Dehnungsmessstreifen entlang einer äußeren Mantelfläche des Lagerrings oder des Lagerringsegmentes erstrecken.

Dabei können Ausführungsbeispiele einen Lagerring oder ein Lagerringsegment derart schaffen, dass eine Gesamtverformung oder eine Gesamtdehnung des Lagerrings messbar wird. Dabei kann der Lagerring aus mehreren Lagerringsegmenten zusammengesetzt sein, von denen in einigen Ausführungsbeispielen nicht jedes einen Dehnungsmessstreifen bzw. eine Einrichtung zum Messen der Ausdehnung aufweist. In Ausführungsbeispielen kann daher ein einzelnes Lagerringsegment oder auch mehrere Lagerringsegmente eines Lagerrings vorkommen, das oder die z.B. einen Dehnungssensor aufweist oder aufweisen, wobei dennoch die Gesamtdehnung oder Verformung des gesamten Lagerrings messbar wird. In Ausführungsbeispielen kann der Dehnungsmessstreifen an vielerlei Stellen des Lagerrings bzw. eines Lagerringsegments angebracht sein, um dazu geeignet zu sein, die aufgrund der Vorspannung hervorgerufene Verformung des Lagerrings bestimmen zu können.

Je nach Material des Lagerrings kann von einer Volumentreue des Lagerrings auch unter Vorspannung ausgegangen werden. Wird beispielsweise ein Außenlagerring von innen nach außen über die Vorspannung belastet, so dehnt sich dieser nach außen aus, d.h. sein Umfang wird vergrößert. In einem Ausführungsbeispiel könnte beispielsweise ein Dehnungsmessstreifen entlang eines Umfangsabschnitts des Lagerrings angebracht sein, so dass sich dieser direkt mit der Umfangserweiterung des Lagerringsegments dehnt. In einem anderen Ausführungsbeispiel könnte der Dehnungsmessstreifen auch in radialer Richtung angebracht sein, so dass von der radialen Ausdehnung des Lagerrings auf die entsprechende Vorspannung direkt, oder auch indirekt über die damit verbundene Umfangsausdehnung, zurückgeschlossen werden kann. In weiteren Ausführungsbeispielen ist denkbar, dass die axiale Verformung des Lagerrings bestimmt wird, in anderen Worten wird sich der Lagerring axial verkürzen, wenn dieser aus einem volumentreuen Material gebildet ist und sich der Umfang erweitert. Auch diese Stauchung oder negative Dehnung würde einen Rückschluss auf die damit verbundene Vorspannung des Lagers zulassen und somit kann in Ausführungsbeispielen auch eine Messung einer axialen Verformung vorkommen.

Ausführungsbeispiele können daher auch ein Lager mit einem Lageraußenring oder einem Lageraußenringsegment gemäß obiger Beschreibung umfassen. Z.B. kann ein solches Lager einen wenigstens zweiteiligen Lagerinnenring umfassen, wobei das Lager ferner Wälzkörper aufweist, die sich zwischen dem Lagerinnenring und dem Lageraußenring befinden. Der Lagerinnenring kann axial derart geteilt sein, dass eine Vorspannung des Lagers über eine zwischen den beiden axial geteilten Lagerinnenringteilen wirkende Kraft einstellbar ist. In anderen Worten kann der geteilte Lagerinnenring in Ausführungsbeispielen eine zumindest abschnittsweise v-förmige oder keilförmige Lauffläche aufweisen, so dass ein Radius der Laufbahn der Wälzkörper, bzw. die Lage der Wälzkörper auf der Laufbahn, von dem Abstand der beiden Lagerinnenringteile abhängt. Durch Einstellen des Abstandes zwischen den beiden Lagerinnenringteilen kann dann die Vorspannung des Lagers eingestellt werden.

Die beiden Lagerinnenringteile und der Lageraußenring können demnach jeweils Laufflächen aufweisen, die gegenüber einer Rotationsachse des Lagers schräg verlaufende Abschnitte aufweisen, wobei die Laufflächen der beiden Lagerinnenringteile derart angeordnet sind, dass sich eine Kraft auf die Wälzkörper und damit auf die Lauffläche des Lageraußenringes erhöht, wenn sich die zwischen den beiden Lagerinnenringteilen axial wirkende Kraft erhöht.

Ausführungsbeispiele können beispielsweise Kegelrollenlager umfassen, die zweireihig in X- oder in O-Anordnung ausgebildet sein können. Unter der O-Anordnung sei hier eine v-förmige Anordnung der Laufflächen der beiden Wälzkörperreihen verstanden, die sich zum Außenring hin öffnet, unter der X-Anordnung sei hier eine v-förmige Anordnung der Laufflächen der beiden Wälzkörperreihen verstanden, die sich zum Innenring hin öffnet.

Darüber hinaus kann in Ausführungsbeispielen zumindest eines der beiden Lagerinnenringteile ein oder mehrere im Wesentlichen radiale Bohrungen zur Durchführung von Öl an die Innenseite des Lagerinnenringteiles aufweisen. Diese Bohrung kann beispielsweise bei der Montage dazu dienen, einen Schmierfilm zwischen dem Lagerinnenringteil und einem zu lagernden Bauteil, z. B. einer Antriebswelle zu erzeugen. Der Schmierfilm kann insbesondere bei größeren Lagern dafür sorgen, dass sich der entsprechende Lagerinnenringteil leichter verschieben lässt und somit eine Vorspannung leichter und präziser eingestellt werden kann.

In weiteren Ausführungsbeispielen kann das Lager ferner einen oder mehrere Temperatursensoren aufweisen. Die Ausdehnung der Lagerteile, d.h. der Lagerringe bzw. deren Teile und der Wälzkörper, kann von der Temperatur abhängen. Bei Montage des Lagers kann ein Anwärmen des Lagers notwendig sein. Um eine noch präzisere Einstellung der Vorspannung zu erreichen, kann durch Temperaturmessung der thermische Einfluss mit berücksichtigt werden. Abkühlzeiten können damit reduziert werden. Im Betrieb kann die Vorspannung des Lagers temperaturabhängig sein. Der Temperatursensor kann dazu dienen, den Einfluss der Temperatur zu ermitteln, so dass ein Einfluss des Zusammenspiels aus Temperatur von Innen-/Außenring und der Verformung des Lageraußenringes auf die Vorspannung berücksichtigt werden kann. In anderen Worten können Ausführungsbeispiele einen oder mehrere Temperatursensoren vorsehen, so dass über die zwischen den Lagerinnenringteilen wirkende Kraft auch ein Temperatureinfluss auf die Vorspannung des Lagers kompensiert werden kann.

Generell können Ausführungsbeispiele eine Vorspannungsregelung oder Steuerung ermöglichen. Beispielsweise bei Windkraftanlagen kann die Vorspannung eines Lagers so an die Windlast angepasst werden. Beispielsweise kann die Vorspannung bei starken Winden erhöht werden, um so nachfolgende Komponenten, wie Generatoren, Getriebe, usw., zu schonen. In anderen Worten können Ausführungsbeispiele ermöglichen, die Vorspannung eines Lagers bei größeren Belastungen zu erhöhen, um so zwar einen größeren Verschleiß im Lager selbst in Kauf zu nehmen, aber gleichzeitig einen Verschleiß nachfolgender Komponenten zu reduzieren. Darüber hinaus können Ausführungsbeispiele auch eine entsprechende Temperaturkompensationsregelung vorsehen und die Vorspannung eines Lagers über Temperaturbereiche hinweg (Sommer/Winter, Tag/Nacht) nachregeln, bzw. im Wesentlichen konstant halten.

Ausführungsbeispiele können daher auch ein Verfahren zur Einstellung einer Vorspannung eines Wälzlagers umfassen. Das Verfahren weist zumindest einen Schritt des Anbringens eines ersten Lagerringteils gegenüber einem zu lagernden Bauteil und einen Schritt des Anbringens eines zweiten Lagerringteils gegenüber dem zu lagernden Bauteil auf. Darüber hinaus umfasst das Verfahren ein Messen einer Ausdehnung eines Lageraußenrings, wenn das erste Lagerringteil mit dem zweiten Lagerringteil einen Lagerinnenring bildet, oder Messen einer Ausdehnung eines Lagerinnenrings, wenn das erste Lagerringteil mit dem zweiten Lagerringteil einen Lageraußenring bildet. In anderen Worten kann in Ausführungsbeispielen die Ausdehnung eines Lagerinnerrings oder eines Lageraußenrings gemessen werden.

Das Verfahren umfasst ferner ein Einstellen eines axialen Abstandes zwischen dem ersten Lagerringteil und dem zweiten Lagerringteil, wobei das erste Lagerringteil mit dem zweiten Lagerringteil einen Lagerinnenring oder einen Lageraußenring bildet und ein Fixieren des ersten Lagerringteils bezüglich des zweiten Lagerringteils derart, dass die Ausdehnung einer vorgegebenen Ausdehnung entspricht, wobei die vorgegebene Ausdehnung von einer definierten Vorspannung des Wälzlagers abhängt.

In weiteren Ausführungsbeispielen kann das Verfahren auch ein Messen der Temperatur des Lagerinnenrings und/oder ein Messen einer Temperatur des Lageraußenrings umfassen, wobei die vorgegebene Ausdehnung von wenigstens einer der Temperaturen abhängt. Demnach kann dann der axiale Abstand zwischen dem ersten Lagerringteil und dem zweiten Lagerringteil, und damit die Vorspannung, unter Berücksichtigung der Temperatur eingestellt werden, so dass sich eine gewünschte oder vorgegebene Vorspannung dann auch bei einer anderen Temperatur ergibt.

In Ausführungsbeispielen kann das Einstellen ein Einbringen von Drucköl in eine Bohrung eines Lagerinnenringteils umfassen, so dass ein Schmierfilm zwischen dem Lagerinnenringteil und dem zu lagernden Bauteil gebildet wird. Das Fixieren kann ein Anbringen eines oder mehrerer Klemmringe an dem Lagerinnenringteil umfassen. Der Klemmring kann dann die beiden Lagerinnenringteile in einer Position halten, für die sich die vorgegebene Vorspannung ergibt.

Ausführungsbeispiele können daher den Vorteil bieten, dass Breitentoleranzen zur Festlegung der Vorspannung nur noch einen stark reduzierten oder im Wesentlichen keinen Einfluss auf die Vorspannung mehr haben und Schleifvorgänge eingespart werden können. Ebenso können die Einflüsse des Wellen-Istmaßes und des Bohrungs-Istmaßes auf die Vorspannung reduziert werden. Darüber hinaus können Temperaturverhältnisse am Lager berücksichtigt werden. Die erfassten Messwerte können zur Dokumentation gespeichert und ausgewertet werden. Ausführungsbeispiele können den Vorteil bieten, dass Präzision nur noch am Klemmring erforderlich sein kann, wobei aufgrund dessen geringer Breite die Toleranzbreite dieser Größe relativ klein sein kann.

Ausführungsbeispiele können eine Messung der tatsächlich anliegenden, lagerinternen Kräfte ermöglichen, da zwischen diesen und der Verformung des Lagerrings oder des Lagerringsegmentes ein direkter Zusammenhang besteht. Auf eine komplizierte Berechnung zur Bestimmung der notwendigen Innenringbreite kann verzichtet werden, da auf die Wechselwirkung von Vorspannung und Aufweitung bzw. Dehnung zurückgegriffen werden kann.

Ausführungsbeispiele können eine flexible Anpassung der Vorspannung auf besondere Begebenheiten ermöglichen, so dass ein bestimmtes Lager durch die Einstellmöglichkeiten der Vorspannung nun einen erweiterten Einsatzbereich finden kann. Ferner können Transportschäden vermieden werden, da die beim Transport liegendem Lager, insbesondere die Wälzkörper, kein Spiel aufweisen.

Einige Ausführungsbeispiele, die als Beispiele und nicht als einschränkend zu verstehen sind, werden im Folgenden anhand der beiliegenden Figuren im Detail erläutert. Es zeigen
Figur 1 einen Ausschnitt eines Ausführungsbeispiel eines Lagerrings;
Figur 2 einen Ausschnitt eines weiteren Ausführungsbeispiels eines Lagerrings mit Temperatursensoren;
Figur 3 ein Ablaufdiagramm eines Ausführungsbeispiels eines Verfahrens;
Figur 4 einen Ausschnitt eines weiteren Ausführungsbeispiel eines Lagerrings mit einer Illustration eines Überstandes eines Lagerringteils;
Figur 5 einen Ausschnitt eines Ausführungsbeispiel eines Lagerrings mit einer Bohrung zur Durchleitung von Öl;
Figur 6 einen Ausschnitt eines Ausführungsbeispiels eines Lagerrings mit einem Klemmring;
Figur 7 eine Anordnung mit einem konventionellen Kegelrollenlager.

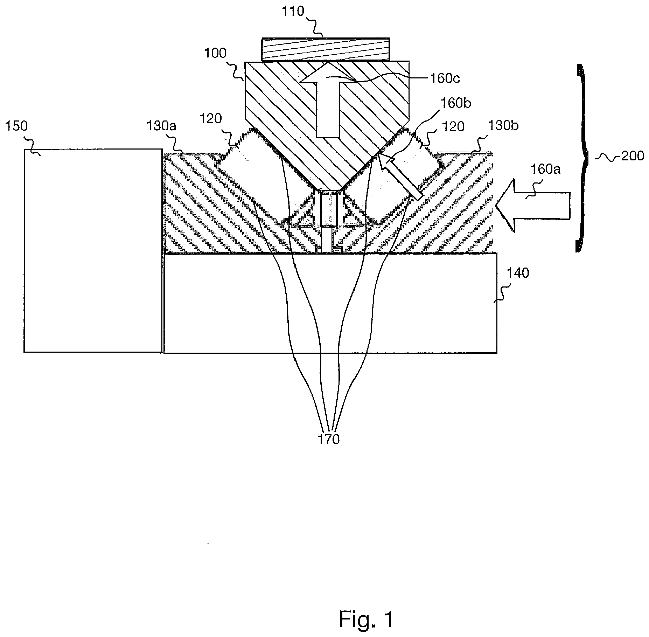

Figur 1 zeigt einen Ausschnitt einer Anordnung mit einem Lagerring 100 oder einem Lagerringsegment des Lagerrings 100 mit einer Einrichtung 110 zum Messen einer Dehnung eines Umfangs des Lagerrings 100. Die Einrichtung 110 zum Messen entspricht hier einem Dehnungsmessstreifen 110. Der Lagerring 100 ist in dem Ausführungsbeispiel der Figur 1 als Lageraußenring 100 ausgeführt. Die Anordnung zeigt ferner Wälzkörper 120 und einen axial geteilten Lagerinnenring 130 mit den Lagerinnenringteilen 130a und 130b. Der Lagerinnenring 130 ist dabei auf eine Antriebswelle 140 aufgebracht, die eine Wellenschulter 150 aufweist. Der Lagerinnenringteil 130a stützt sich auf der Wellenschulter 150 ab.

Wie die Figur 1 zeigt, ist der Dehnungsmessstreifen 110 derart mit dem Lagerring 100 oder dem Lagerringsegment 100 mechanisch gekoppelt, dass eine Änderung des Umfangs des Lagerrings 100 erfasst werden kann. Der Dehnungsmessstreifen 110 kann beispielsweise entlang eines Abschnitts des Umfangs angebracht sein, er kann sich beispielsweise entlang einer äußeren Mantelfläche des Lagerrings 100 oder des Lagerringsegmentes 100 erstrecken. Eine Vergrößerung des Umfangs des Lagerrings 100 führt daher zu einer Dehnung des Dehnungsmessstreifens 110.

Die Figur 1 zeigt damit auch das gesamte Lager 200 mit dem Lageraußenring 100 oder dem Lageraußenringsegment 100 und dem wenigstens zweiteiligen Lagerinnenring 130, 130a, 130b. Das Lager 200 umfasst ferner die Wälzkörper 120, die sich zwischen dem Lagerinnenring 130 und dem Lageraußenring 100 befinden. Der Lagerinnenring 130 ist axial derart geteilt, dass eine Vorspannung des Lagers 200 über eine zwischen den beiden axial geteilten Lagerinnenringteilen 130a, 130b wirkende Kraft 160a einstellbar ist. Im Folgenden werden Reibungsverluste vernachlässigt.

In der Figur 1 illustrieren die Pfeile 160a, 160b und 160c den Kräfteverlauf. Der Pfeil 160a zeigt dabei eine Kraft an, die axial auf den Lagerinnenringteil 130b wirkt. Da der Lagerinnenringteil 130a durch die Wellenschulter 150 bereits fixiert ist, entspricht die Kraft 160a, unter Vernachlässigung etwaiger Reibungsverluste, der zwischen den Lagerinnenringteilen 130a und 130b wirkenden Kraft.

Die Figur 1 zeigt ferner, dass die beiden Lagerinnenringteile 130a, 130b und der Lageraußenring 100 jeweils Laufflächen 170 aufweisen, die mit den Wälzkörpern 120 in Kontakt stehen. In dem Ausführungsbeispiel weisen alle Laufflächen 170 gegenüber einer Rotationsachse des Lagers 200 schräg verlaufende Abschnitte auf und die Laufflächen 170 der beiden Lagerinnenringteile 130a, 130b sind derart angeordnet, dass sich eine Kraft 160b auf die Wälzkörper 120 und damit auf die Lauffläche 170 des Lageraußenringes 100 erhöht, wenn sich die zwischen den beiden axial geteilten Lagerinnenringteilen 130a, 130b wirkende Kraft 160a erhöht. Damit erhöht sich letztlich auch die Kraft 160c auf den Lageraußenring 100 mit dem Dehnungsmessstreifen 110, welcher sich daraufhin dehnt und die Verformung des Lageraußenringes 100 messbar macht.

Die Figur 1 zeigt ein Ausführungsbeispiel, das als zweireihiges Kegelrollenlager 200 in O-Anordnung ausgebildet ist. In einer Implementierung könnte die Antriebswelle 140 einen Innendurchmesser von 2245mm und einen Außendurchmesser von 2620mm haben, demnach könnte der Innendurchmesser der Lagerinnenringteile 130a, 130b ebenfalls bei 2620mm liegen. Ein durchschnittlicher Außendurchmesser des Lagerinnenrings 130 könnte 2740mm betragen. In dieser Implementierung kann eine Aufweitung am Durchmesser beispielsweise zwischen 250µm - 400µm liegen, eine Aufweitung am Umfang kann z.B. bei ca. 1.000µm liegen.

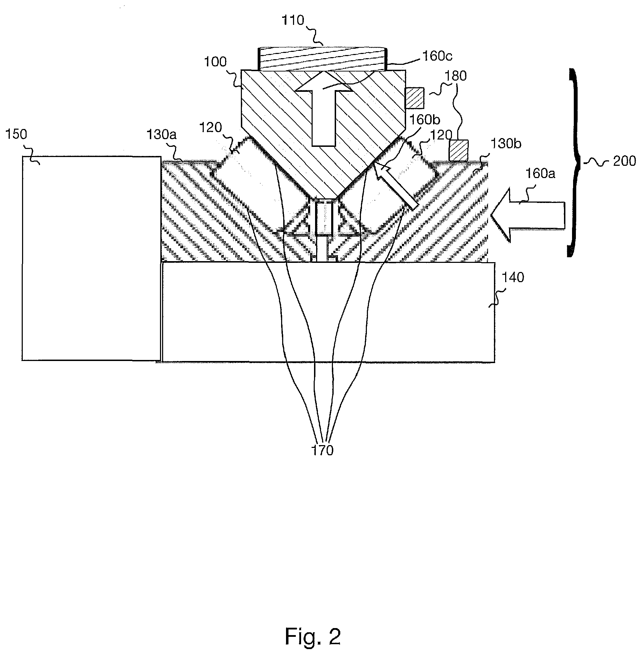

Die im Folgenden zur weiteren Erläuterung von Ausführungsbeispielen beschriebenen Figuren weisen teilweise gleiche Komponenten auf, wie sie bereits anhand der Figur 1 erläutert wurden. Auf eine wiederholte Beschreibung wird verzichtet, gleiche Bezugszeichen bezeichnen gleiche oder funktionsähnliche Komponenten. Figur 2 zeigt einen Ausschnitt eines weiteren Ausführungsbeispiels mit zusätzlichen Temperatursensoren 180, wobei in der gezeigten Implementierung je ein Temperatursensor 180 an dem Lageraußenring 100 und an dem Lagerinnenringteil 130b angebracht ist. Die Temperatursensoren erlauben eine Messung der Temperaturen des Außenrings 100 und des Innenrings 130. In Ausführungsbeispielen kann daraus direkt ein Temperatureinfluss berechnet bzw. bei der Einstellung der Vorspannung berücksichtigt werden.

In anderen Worten kann das in der Figur 2 gezeigte Ausführungsbeispiel dazu dienen, den Temperatureinfluss auf die Ausdehnung zu bestimmen, um dann nachfolgend aus Temperatureinfluss und Vorspannungseinfluss die Kraft 160a über die Position des Lagerinnenringteils 130b so einzustellen, dass sich unter Berücksichtigung der Temperatur die vorgegebene oder vordefinierte Vorspannung ergibt. Bei baugleichen Lagern lässt sich dann der bekannte Temperatureinfluss auch ohne erneute Messung berücksichtigen und die Vorspannung, ggf. unter Berücksichtigung der Umgebungstemperatur, entsprechend einstellen. In manchen Ausführungsbeispielen kann eine warme Montage des Lagers 200, insbesondere der Lagerinnenringteile 130a, 130b auf die Antriebswelle 140 erfolgen. Auch bei diesem Montagevorgang kann die in dem Ausführungsbeispiel der Figur 2 gezeigte Implementierung dazu verwendet werden, einen Temperaturunterschied zwischen den Lagerringen zu berücksichtigen.

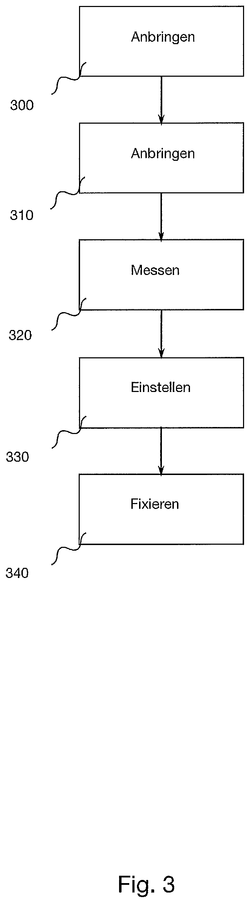

Figur 3 zeigt ein Ablaufdiagramm eines Ausführungsbeispiels eines Verfahrens zur Einstellung einer Vorspannung eines Wälzlagers 200. Das Verfahren umfasst einen Schritt des Anbringens 300 eines ersten Lagerringteils 130a gegenüber einem zu lagernden Bauteil 140 und einen Schritt des Anbringens 310 eines zweiten Lagerringteils 130b gegenüber dem zu lagernden Bauteil 140. Das Verfahren umfasst ferner ein Messen 320 einer Ausdehnung eines Lageraußenrings 100, wenn das erste Lagerringteil 130a mit dem zweiten Lagerringteil 130b einen Lagerinnenring bildet, oder Messen einer Ausdehnung eines Lagerinnenrings, wenn das erste Lagerringteil mit dem zweiten Lagerringteil einen Lageraußenring bildet. In Ausführungsbeispielen sind beide Varianten denkbar. Darüber hinaus umfasst das Verfahren ein Einstellen 330 eines axialen Abstandes zwischen dem ersten Lagerringteil 130a und dem zweiten Lagerringteil 130b, wobei das erste Lagerringteil 130a mit dem zweiten Lagerringteil 130b einen Lagerinnenring 130 oder einen Lageraußenring bildet. Das Verfahren umfasst ferner ein Fixieren 340 des ersten Lagerringteils 130a bezüglich des zweiten Lagerringteils 130b derart, dass die Ausdehnung einer vorgegebenen Ausdehnung entspricht, wobei die vorgegebene Ausdehnung von einer Vorspannkraft des Wälzlagers 200 abhängt.

Gemäß obiger Beschreibung kann das Verfahren ferner ein Messen der Temperatur des Lagerinnenrings 130a, 130b und/oder ein Messen einer Temperatur des Lageraußenrings 100 umfassen, wobei die vorgegebene Ausdehnung von wenigstens einer der Temperaturen abhängt.

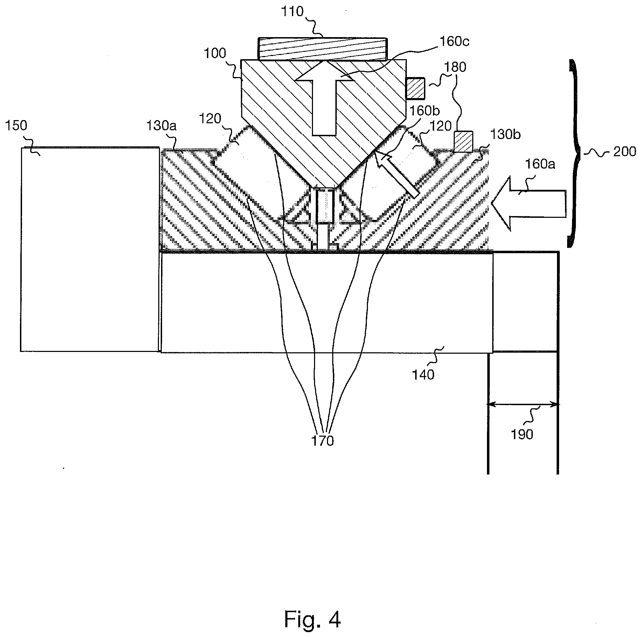

Figur 4 zeigt einen Ausschnitt eines weiteren Ausführungsbeispiels eines Lagerrings 130 bzw. eines Lagers 200 mit einer Illustration eines Überstandes 190 des Lagerringteils 130b. Die in der Figur 4 gezeigte Anordnung gleicht derjenigen aus der Figur 2, wobei in der Figur 4 zusätzlich der Überstand 190 des Lagerringteils 130b gegenüber der Antriebswelle 140 gezeigt ist. Darüber hinaus zeigt das Ausführungsbeispiel der Figur 4 die gleichen Komponenten mit den gleichen Bezugszeichen, wie sie bereits anhand der Figur 2 erläutert wurden und hier auf eine wiederholte Beschreibung verzichtet wird.

Der Überstand 190 des Lagerringteils 130b definiert eine relative Position des Lagerringteils 130b gegenüber der Antriebswelle 140 und des anderen Lagerringteils 130b. Wie die Figur 4 und die obige Erläuterung zu den vorangehenden Figuren zeigen, ist in dem betrachteten Ausführungsbeispiel der Lagerringteil 130b bzw. dessen Lauffläche keilförmig ausgeführt, so dass eine axiale Position des Lagerringteils 130b relativ zur Antriebwelle 140, bei bereits fixiertem Lagerringteil 130a, auch die Kräfte 160a, 160b und 160c bestimmt. Die relative Position oder der Überstand 190 kann demnach durch Messen der Ausdehnung des Lageraußenringes 100 mit dem Dehnungsmessstreifen 110 bestimmt werden. In anderen Worten kann der Überstand 190 nach Einstellen der Dehnung ebenfalls gemessen werden.

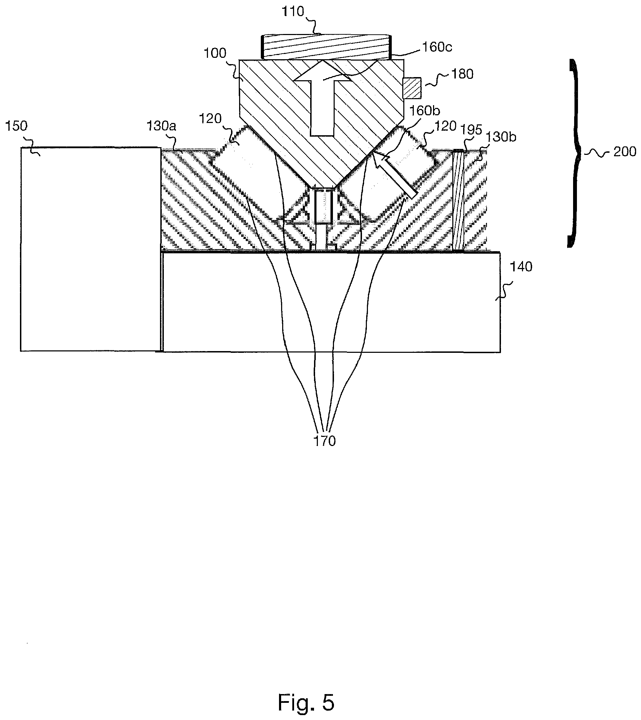

Um ein leichteres Verschieben bzw. Positionieren oder Einstellen des Lagerringteils 130b zu ermöglichen, kann an diesem eine Bohrung 195 vorgesehen sein, die eine Zuführung von Öl erlaubt. Figur 5 illustriert einen Ausschnitt eines Ausführungsbeispiels eines Lagerringteils 130b mit einer Bohrung 195 zur Durchleitung von Öl. Die Figur 5 zeigt ansonsten wiederum die gleichen Komponenten wie die vorangehenden Figuren, gleiche Bezugszeichen bezeichnen gleiche Komponenten. Der Übersichtlichkeit halber ist in der Figur 5 nur ein Temperatursensor 180 dargestellt. In Ausführungsbeispielen kann zumindest einer der beiden Lagerinnenringteile 130a, 130b eine im Wesentlichen radiale Bohrung 195 zur Durchführung von Öl an die Innenseite des Lagerinnenringteiles 130b aufweisen. Die Bohrung 195 ermöglicht ein beispielsweise mit Druck beaufschlagtes Öl zwischen den Lagerringteil 130b und die Antriebswelle zu bringen, so dass sich dort ein Schmierfilm bildet und der Lagerringteil 130b somit leichter gegenüber der Antriebwelle 140 bewegt werden kann. In Ausführungsbeispielen können auch mehrere Bohrungen 195 in dem Lagerringteil 130b vorgesehen sein, bzw. die Bohrungen können auch in dem Lagerringteil 130a vorgesehen sein, sofern die ebenfalls beweglich angeordnet ist. Z.B kann eine Anzahl von Bohrungen über den Umfang des Lagerringteils 130a,b verteilt sein, so dass sich der Schmierfilm gleichmäßig bilden lässt.

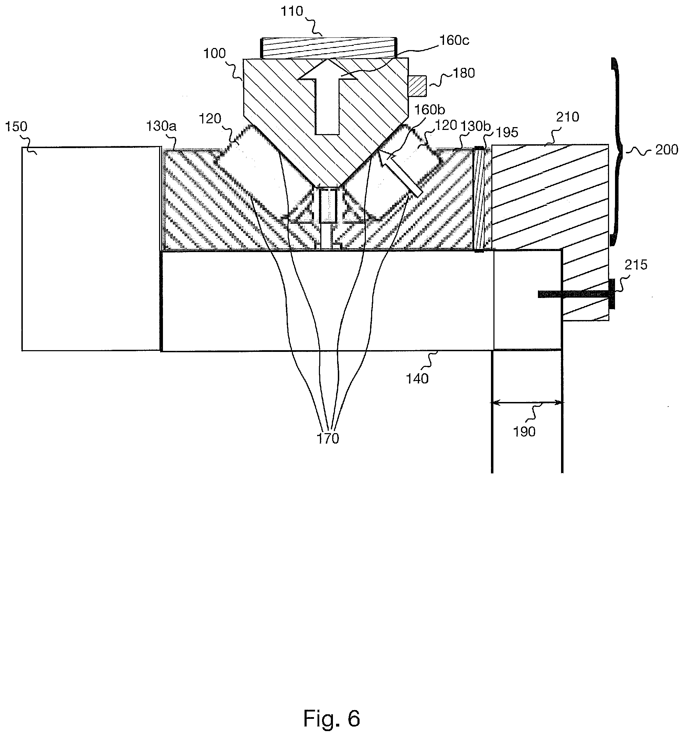

In Ausführungsbeispielen kann das Einstellen 330 ein Einbringen von Drucköl in eine Bohrung 195 eines Lagerinnenringteils 130b umfassen, so dass ein Schmierfilm zwischen dem Lagerinnenringteil 130b und dem zu lagernden Bauteil 140 gebildet wird. Darüber hinaus kann das Fixieren 340 ein Anbringen eines Klemmrings 210 an dem Lagerinnenringteil umfassen. Figur 6 zeigt ein Ausführungsbeispiel einer Anordnung mit einem Klemmring 210 zum Fixieren und zum Einstellen des Überstandes 190 des Lagerringteils 130b. Der Klemmring 210 ist dabei mit einer Klemmschraube 215 an der Antriebswelle 140 befestigt. In Ausführungsbeispielen kann der Klemmring 210 und damit der Lagerringteil 130b bzw. der Überstand 190 über die Klemmschraube 215 eingestellt werden. Die Figur 6 zeigt darüber hinaus die gleichen Komponenten wie die Figur 5, gleiche Bezugszeichen bezeichnen wiederum gleiche Komponenten.

Generell kann in Ausführungsbeispielen auch eine warme Montage des Lagers 200 auf das zu lagernde Bauteil 140 erfolgen. Über die Temperatursensoren 180 kann eine Messung der Temperaturen des Innenrings 130 und des Außenrings 100 erfolgen. Auf diesen basierend kann eine Berechnung des Temperatureinflusses auf die Lagervorspannung erfolgen. Das Einstellen 330 kann dann durch Aufschieben des Lagerringteil 130b, z.B. auch bei Drehung des Lagers 200 erfolgen, bis der Dehnungsmessstreifen 110 die gewünschte Aufweitung oder Dehnung anzeigt. In Ausführungsbeispielen kann der Dehnungsmessstreifen 110 kabelgebunden oder schnurlos an ein Messsystem angebunden sein. In manchen Ausführungsbeispielen kann der Dehnungsmessstreifen z.B. über Blue Tooth, WLAN (von engl. Wireless Local Area Network), RFID (von engl. Radio Frequency Identification), UWB (von engl. Ultra Wideband), IR (Infra-Rot), usw. schnurlos an das Messsystem angebunden sein. Wenn die gewünschte Dehnung des Lageraußenringes erreicht ist, kann darüber hinaus ein Messen des Überstandes 190 für den Klemmring 210, d.h. ein Abstand der Lagerinnenringseitenfläche relativ zu der Antriebswelle 140, erfolgen. Im Anschluss kann dann eine Endmontage des Klemmringes 210 und ggf. ein nochmaliges Überprüfen der Aufweitung bis zur Endposition des Klemmringes erfolgen.

In Ausführungsbeispielen kann auch erst das Lager erwärmt werden und danach wieder abgekühlt werden. Wie bereits oben beschrieben kann mit Drucköl der Lagerinnenringteil 130, z.B. durch den Schmierfilm, aufgeweitet und so weit auf die Antriebswelle 140 aufgeschoben werden, bis am Außendurchmesser des Lageraußenrings 100 die entsprechende Veränderung gemessen werden kann. Der Dehnungsmessstreifen 100 stellt hinsichtlich der Montagetemperatur kein Problem dar, da dessen Messbereich auch bis weit über 100°C gehen kann, je nach Auswahl des Dehnungsmessstreifens.

Wie die Figur 6 zeigt, kann das Drucköl am der Wellenschulter 150 abgewandten Ende der Antriebswelle 140 in den Lagerinnenringteil 130b eingebracht werden. Beispielsweise kann das Lagerinnenringteil 130b in Ausführungsbeispielen auch über einen Referenzklemmring 210 vormontiert bzw. eingestellt werden. Nachdem dann die entsprechende Aufweitung oder Dehnung des Lageraußenrings 100 gemessen wurde, kann der zugehörige Überstand 190 bestimmt werden. Danach kann dann die Montage des Klemmrings 210 erfolgen. Die Montage des Klemmrings 210 oder des Referenzklemmrings 210 kann auch über ein Einbringen von Distanz- oder Passscheiben zwischen den Klemmring 210 und die Antriebswelle 140 oder auch zwischen Klemmring 210 und Lagerringteil 130b erfolgen. In anderen Ausführungsbeispielen kann der Überstand auch zunächst bestimmt werden und der Klemmring dann entsprechend nachgearbeitet werden.

Generell können Ausführungsbeispiele den Vorteil bieten, dass die Lagerinnenringteile 130a und 130b nicht mehr aneinander liegen, so dass es in dieser Richtung keine Kraftübertragung mehr gibt, da sich die Stirnflächen der Lagerringteile nicht berühren und nicht aneinander reiben. In Ausführungsbeispielen kann die Bestimmung der Vorspannung über eine Bestimmung der Aufweitung in einem einfachen Modell ermöglicht werden, welches beispielsweise 2-dimensional ausgeführt sein kann. In der Praxis, beispielsweise bei größeren Lagern für Windkraftanlagen oder Unterwasserkraftwerke, kann eine Verifizierung der Dehnung oder der Aufweitung an einem Großlagerprüfstand durchgeführt werden. Der Einfluss von Bohrungen/Temperaturen kann dort entsprechend berücksichtigt werden. Gegenüber konventionellen Konzepten kann mit Ausführungsbeispielen weitgehend auf Breitentoleranzen zur Festlegung oder Beeinflussung der Vorspannung verzichtet werden, was die Präzisionsanforderungen an die entsprechenden Komponenten reduziert und deren Fertigung erleichtert werden kann. Schleifvorgänge können so eingespart werden. In ähnlicher Weise kann der Einfluss des Wellen-Istmaßes auf die Vorspannung reduziert werden und auch hier Aufwand in der Bearbeitung und Fertigung eingespart werden.

Ebenso können Ausführungsbeispiele eine Reduzierung des Einflusses des Bohrungs-Istmaßes des Lagers auf die Vorspannung ermöglichen sowie eine Berücksichtigung der Temperaturverhältnisse am Lager und damit auch eine Reduzierung der Temperatureinflüsse. Ferner kann durch die Erfassung der Messwerte eine Datensammlung zur Dokumentation erzeugt und für gleiche Anordnungen oder Lager wiederverwendet werden. In manchen Ausführungsbeispielen kann eine Präzision nur noch am Klemmring erfolgen, aufgrund geringer Breite ist die Toleranzbreite dieser Größe relativ klein. Darüber hinaus kann eine Messung der tatsächlich anliegenden, lagerinternen Kräfte erfolgen. Dabei kann auf komplizierte Berechnungen zur Bestimmung der notwendigen Innenringbreite weitgehend verzichtet werden. Ferner kann eine flexible Anpassung der Vorspannung auf besondere Begebenheiten erfolgen. Für den liegenden Transport haben die Wälzkörper im Wesentlichen kein Spiel. So können Transportschäden weitgehend verhindert werden.

Zusammenfassend können Ausführungsbeispiele ein einfaches Konzept zur Einstellung der Vorspannung an Lagern schaffen, wobei Kosten und Fertigungsaufwand aufgrund der höheren Bauteiltoleranzen eingespart werden können und die Vorspannung dennoch präzise einstellbar ist.

### Bezugszeichenliste

- 100: Lagerring, Lagerringsegment, Lageraußenring
- 110: Einrichtung zum Messen, Dehnungsmessstreifen
- 120: Wälzkörper
- 130: Lagerinnenring
- 130a,b: Lagerinnenringteile
- 140: Antriebswelle
- 150: Wellenschulter
- 160a,b,c: Kräfte
- 170: Laufflächen
- 180: Temperatursensoren
- 190: Überstand
- 195: Bohrung
- 200: Lager
- 210: Klemmring
- 215: Klemmschraube
- 300: Anbringen
- 310: Anbringen
- 320: Messen
- 330: Einstellen
- 340: Fixieren
- 700: Anordnung
- 710: Lageraußenring
- 720: Wälzkörper
- 730: Lagerinnenringteil
- 740: Lagerinnenringteil
- 750: Antriebswelle

## Patentansprüche

1. Ein Lager (200) mit einem Lageraußenring (100) oder einem Lageraußenringsegment(100) mit einer Einrichtung (110) zum Messen einer Dehnung eines Umfangs des Lagerrings (100) und einem wenigstens zweiteiligen Lagerinnenring(130, 130a, 130b), wobei das Lager (200) ferner Wälzkörper (120) aufweist, die sich zwischen dem Lagerinnenring (130) und dem Lageraußenring (100) befinden, und wobei der Lagerinnenring (100) axial derart geteilt ist, dass eine Vorspannung des Lagers (200) über eine zwischen den beiden axial geteilten Lagerinnenringteilen (130) wirkende Kraft einstellbar ist, wobei das Lager (200) ferner einen oder mehrere Temperatursensoren (180) aufweist, so dass über die zwischen den Lagerinnenringteilen (100) wirkende Kraft ein Einfluss des Zusammenspiels aus Temperatur von Innen-/ Außenring und der Verformung des Lageraußenrings auf die Vorspannung des Lagers kompensierbar ist.

2. Das Lager gemäß Anspruch 1, bei dem die Einrichtung (110) zum Messen einen Dehnungsmessstreifen (110) umfasst, wobei der Dehnungsmessstreifen (110) derart mit dem Lagerring (100) oder dem Lagerringsegment (100) mechanisch gekoppelt ist, um eine Änderung des Umfangs des Lagerrings (100) zu erfassen und/oder wobei sich der Dehnungsmessstreifen (110) entlang einer äußeren Mantelfläche des Lagerrings (100) oder des Lagerringsegmentes (100) erstreckt.

3. Das Lager (200) gemäß einem der Ansprüche 1 oder 2 bei dem die beiden Lagerinnenringteile (130, 130a, 130b) jeweils eine Lauffläche (170) aufweisen und der Lageraußenring (100) eine Lauffläche (170) aufweist, wobei alle Laufflächen (170) gegenüber einer Rotationsachse des Lagers (200) schräg verlaufende Abschnitte aufweisen und die Laufflächen (170) der beiden Lagerinnenringteile (130a, 130b) derart angeordnet sind, dass sich eine Kraft auf die Wälzkörper (120) und damit auf die Lauffläche (170) des Lageraußenringes (100) erhöht, wenn sich die zwischen den beiden axial geteilten Lagerinnenringteilen (130a, 130b) wirkende Kraft erhöht.

4. Das Lager (200) gemäß einem der Ansprüche 1 bis 3, welches als zweireihiges Kegelrollenlager in X- oder in O-Anordnung ausgebildet ist.

5. Das Lager (200) gemäß einem der Ansprüche 1 bis 4, bei dem zumindest einer der beiden Lagerinnenringteile (130a, 130b) eine im Wesentlichen radiale Bohrung (195) zur Durchführung von Öl an die Innenseite des Lagerinnenringteiles (130b) aufweist.

6. Ein Verfahren zur Einstellung einer Vorspannung eines Wälzlagers (200), mit zumindest folgenden Schritten:
Anbringen (300) eines ersten Lagerringteils (130a) gegenüber einem zu lagernden Bauteil (140);
Anbringen (310) eines zweiten Lagerringteils (130b) gegenüber dem zu lagernden Bauteil (140);
Messen (320) einer Ausdehnung eines Lageraußenrings (100), wenn das erste Lagerringteil (130a) mit dem zweiten Lagerringteil (130b) einen Lagerinnenring (130) bildet, oder Messen einer Ausdehnung eines Lagerinnenrings (130), wenn das erste Lagerringteil mit dem zweiten Lagerringteil einen Lageraußenring (100) bildet;
Messen der Temperatur des Lagerinnenrings (130) oder des Lageraußenrings (100), wobei die vorgegebene Ausdehnung von wenigstens einer der Temperaturen abhängt;
Einstellen (330), basierend auf der Temperatur, eines axialen Abstandes zwischen dem ersten Lagerringteil (130a) und dem zweiten Lagerringteil (130b), wobei das erste Lagerringteil (130a) mit dem zweiten Lagerringteil (130b) einen Lagerinnenring (130) oder einen Lageraußenring (100) bildet;
Fixieren (340) des ersten Lagerringteils (130a) bezüglich des zweiten Lagerringteils (130b) derart, dass die Ausdehnung einer vorgegebenen Ausdehnung entspricht, wobei die vorgegebene Ausdehnung von einer Vorspannkraft des Wälzlagers (200) abhängt.

7. Das Verfahren gemäß dem vorangehenden Anspruch, das ferner ein Regeln zur Kompensation des Einflusses der Temperatur umfasst.

8. Das Verfahren gemäß einem der Ansprüche 6 oder 7, bei dem das Einstellen (330) ein Einbringen von Drucköl in eine Bohrung (195) eines Lagerinnenringteils (130b) umfasst, so dass ein Schmierfilm zwischen dem Lagerinnenringteil (130b) und dem zu lagernden Bauteil (140) gebildet wird, und/oder bei dem das Fixieren (340) ein Anbringen eines Klemmrings (210) an dem Lagerinnenringteil (130b) umfasst.

## Claims

1. Bearing (200) having a bearing outer ring (100) or a bearing outer ring segment (100) with a device (110) for measuring an elongation of a circumference of the bearing ring (100) and an at least two-piece bearing inner ring (130, 130a, 130b), the bearing (200) having, furthermore, rolling bodies (120) which are situated between the bearing inner ring (130) and the bearing outer ring (100), and the bearing inner ring (100) being split axially in such a way that a prestress of the bearing (200) can be set via a force which acts between the two axially split bearing inner ring parts (130), the bearing (200) having, furthermore, one or more temperature sensors (180), with the result that an influence of the interaction of the temperature of the inner/outer ring and the deformation of the bearing outer ring on the prestress of the bearing can be compensated for via the force which acts between the bearing inner ring parts (100).

2. Bearing according to Claim 1, in the case of which the device (110) for measuring comprises a strain gauge (110), the strain gauge (110) being coupled mechanically to the bearing ring (100) or the bearing ring segment (100) so as to detect a change in the circumference of the bearing ring (100), and/or the strain gauge (110) extending along an outer circumferential face of the bearing ring (100) or the bearing ring segment (100).

3. Bearing (200) according to either of Claims 1 and 2, in the case of which the two bearing inner ring parts (130, 130a, 130b) in each case have a running face (170), and the bearing outer ring (100) has a running face (170), all of the running faces (170) having obliquely running sections with respect to a rotational axis of the bearing (200), and the running faces (170) of the two bearing inner ring parts (130a, 130b) being arranged in such a way that a force on the rolling bodies (120) and therefore on the running face (170) of the bearing outer ring (100) increases if the force which acts between the two axially split bearing inner ring parts (130a, 130b) increases.

4. Bearing (200) according to one of Claims 1 to 3, which bearing (200) is configured as a double-row tapered roller bearing in an X-arrangement or in an O-arrangement.

5. Bearing (200) according to one of Claims 1 to 4, in the case of which at least one of the two bearing inner ring parts (130a, 130b) has a substantially radial bore (195) for conducting oil through onto the inner side of the bearing inner ring part (130b).

6. Method for setting a prestress of an anti-friction bearing (200), having at least the following steps:
attaching (300) of a first bearing ring part (130a) with respect to a component (140) to be mounted;
attaching (310) of a second bearing ring part (130b) with respect to the component (140) to be mounted;
measuring (320) of an elongation of a bearing outer ring (100) when the first bearing ring part (130a) forms a bearing inner ring (130) together with the second bearing ring part (130b), or measuring of an elongation of a bearing inner ring (130) when the first bearing ring part forms a bearing outer ring (100) together with the second bearing ring part;
measuring of the temperature of the bearing inner ring (130) or the bearing outer ring (100), the predefined elongation being dependent on at least one of the temperatures;
setting (330), based on the temperature, of an axial spacing between the first bearing ring part (130a) and the second bearing ring part (130b), the first bearing ring part (130a) forming a bearing inner ring (130) or a bearing outer ring (100) together with the second bearing ring part (130b);
fixing (340) of the first bearing ring part (130a) with regard to the second bearing ring part (130b) in such a way that the elongation corresponds to a predefined elongation, the predefined elongation being dependent on a prestressing force of the anti-friction bearing (200).

7. Method according to the preceding claim, which method comprises, furthermore, regulating for the compensation of the influence of the temperature.

8. Method according to either of Claims 6 and 7, in the case of which the setting (330) comprises an introduction of pressurized oil into a bore (195) of a bearing inner ring part (130b), with the result that a lubricating film is formed between the bearing inner ring part (130b) and the component (140) to be mounted, and/or in the case of which the fixing (340) comprises an attachment of a clamping ring (210) to the bearing inner ring part (130b) .

## Revendications

1. Palier (200) avec une bague extérieure de roulement (100) ou un segment de bague extérieure de roulement (100) avec un dispositif (110) pour mesurer un allongement d'un périmètre de la bague de roulement (100) et avec une bague intérieure de roulement en au moins deux parties (130, 130a, 130b), dans lequel le palier (200) présente en outre des corps de roulement (120), qui se trouvent entre la bague intérieure de roulement (130) et la bague extérieure de roulement (100), et dans lequel la bague intérieure de roulement (100) est divisée axialement, de telle manière qu'une précontrainte du palier (200) puisse être réglée par une force agissant entre les deux parties de bague intérieure de roulement divisées axialement (130), dans lequel le palier (200) présente en outre un ou plusieurs capteur(s) de température (180), de telle manière qu'une influence de l'interaction entre la température de la bague intérieure/extérieure et la déformation de la bague extérieure de roulement sur la précontrainte du palier puisse être compensée par la force agissant entre les parties de bague intérieure de roulement (100).

2. Palier selon la revendication 1, dans lequel le dispositif (110) prévu pour la mesure comprend une jauge extensométrique (110), dans lequel la jauge extensométrique (110) est couplée mécaniquement à la bague de roulement (100) ou au segment de bague de roulement (100), afin de détecter une variation du périmètre de la bague de roulement (100) et/ou dans lequel la jauge extensométrique (110) s'étend le long d'une face latérale extérieure de la bague de roulement (100) ou du segment de bague de roulement (100).

3. Palier (200) selon une des revendications 1 ou 2, dans lequel les deux parties de bague intérieure de roulement (130, 130a, 130b) présentent chacune une surface de roulement (170) et la bague extérieure de roulement (100) présente une surface de roulement (170), dans lequel toutes les surfaces de roulement (170) présentent des parties s'étendant en oblique par rapport à un axe de rotation du palier (200) et les surfaces de roulement (170) des deux parties de bague intérieure de roulement (130a, 130b) sont disposées de telle manière qu'une force agissant sur les corps de roulement (120) et dès lors sur les surfaces de roulement (170) de la bague extérieure de roulement (100) augmente, lorsque la force agissant entre les deux parties de bague intérieure de roulement divisées axialement (130a, 130b) augmente.

4. Palier (200) selon l'une quelconque des revendications 1 à 3, qui est formé par un palier à rouleaux coniques à deux rangées agencé en X ou en O.

5. Palier (200) selon l'une quelconque des revendications 1 à 4, dans lequel au moins une des deux parties de bague intérieure de roulement (130a, 130b) présente un alésage essentiellement radial (195) pour le passage d'huile sur le côté intérieur de la partie de bague intérieure de roulement (130b).

6. Procédé de réglage d'une précontrainte d'un palier à roulement (200), présentant au moins les étapes suivantes:
- placer (300) une première partie de bague de roulement (130a) en face d'un élément à supporter (140);
- placer (310) une deuxième partie de bague de roulement (130b) en face de l'élément à supporter (140);
- mesurer (320) un allongement d'une bague extérieure de roulement (100), lorsque la première partie de bague de roulement (130a) forme avec la deuxième partie de bague de roulement (130b) une bague intérieure de roulement (130), ou mesurer un allongement d'une bague intérieure de roulement lorsque la première partie de bague de roulement forme avec la deuxième partie de bague de roulement une bague extérieure de roulement (100);
- mesurer la température de la bague intérieure de roulement (130) ou de la bague extérieure de roulement (100), dans lequel l'allongement prédéterminé dépend d'au moins une des températures;
- régler (330), en se basant sur la température, une distance axiale entre la première partie de bague de roulement (130a) et la deuxième partie de bague de roulement (130b), dans lequel la première partie de bague de roulement (130a) forme avec la deuxième partie de bague de roulement (130b) une bague intérieure de roulement (130) ou une bague extérieure de roulement (100) ;
- fixer (340) la première partie de bague de roulement (130a) par rapport à la deuxième partie de bague de roulement (130b), de telle manière que l'allongement corresponde à un allongement prédéterminé, dans lequel l'allongement prédéterminé dépend d'une force de précontrainte du palier de roulement (200).

7. Procédé selon la revendication précédente, qui comprend en outre une régulation pour compenser l'influence de la température.

8. Procédé selon une des revendications 6 ou 7, dans lequel le réglage (330) comprend une introduction d'huile sous pression dans un alésage (195) d'une partie de bague intérieure de roulement (130b), de telle manière qu'il se forme un film d'huile entre la partie de bague intérieure de roulement (130b) et l'élément à supporter (140), et/ou dans lequel la fixation (340) comprend un placement d'une bague de serrage (210) sur la partie de bague intérieure de roulement (130b).
